# NEUE EUROPÄISCHE PATENTSCHRIFT

(11) **EP 1 413 795 B2**
(45) Veröffentlichungstag und Bekanntmachung des Hinweises auf die Entscheidung über den Einspruch: **30.05.2012**
(45) Hinweis auf die Patenterteilung: 09.04.2008
(21) Anmeldenummer: 03023367.0
(22) Anmeldetag: 16.10.2003
(51) Int. Cl.: F16D 21/06, F16D 13/58

(54) **Drehmomentübertragungsanordnung**
Torque transfer arrangement
Arrangement de transfert de couple

(30) Priorität: 22.10.2002 DE 10249061; 24.09.2003 DE 10344124
(43) Veröffentlichungstag der Anmeldung: 28.04.2004
(73) Patentinhaber: ZF Sachs AG, 97424 Schweinfurt (DE)
(72) Erfinder: Dögel, Thomas, Dipl.-Ing.(FH), 97688 Bad Kissingen (DE); Kister, Igor, Dipl.-Ing.(FH), 97080 Würzburg (DE); Feldhaus, Reinhard, Dipl.-Ing., 97464 Niederwerrn (DE)

(56) Entgegenhaltungen:
- DE-A1- 3 440 927
- DE-A1- 4 414 033
- DE-A1- 10 018 646
- DE-A1- 10 037 646
- DE-A1- 19 519 363
- GB-A- 1 437 640
- GB-A- 2 307 957
- US-A- 3 447 925
- US-B1- 6 273 229

## Beschreibung

Die vorliegende Erfindung betrifft eine Drehmomentübertragungsanordnung, umfassend eine Torsionsschwingungsdämpferanordnung mit einer an ein Antriebsorgan anzubindenden Primärseite und einer gegen die Wirkung einer Dämpferelementenanordnung um eine Drehachse bezüglich der Primärseite drehbaren Sekundärseite, eine Doppelkupplungsanordnung, welche mit der Sekundärseite der Torsionsschwingungsdämpferanordnung gekoppelt ist und einen ersten Kupplungsbereich zur wahlweisen Drehmomentübertragungskopplung mit einem ersten Abtriebsorgan und einen zweiten Kupplungsbereich zur wahlweisen Drehmomentübertragungskupplung mit einem zweiten Abtriebsorgan aufweist.

Beim Einsatz von beispielsweise als so genannte Zweimassenschwungräder aufgebauten Torsionsschwingungsdämpfern in Antriebssträngen bei Fahrzeugen besteht grundsätzlich das Problem, dass derartige Torsionsschwingungsdämpfer insbesondere beim Starten bzw. beim Abstellen eines Antriebsaggregats einen Resonanzbereich durchlaufen. Dabei können überhöhte Schwingungsamplituden der bezüglich einander sich drehenden Primärseite und Sekundärseite auftreten, die sich einerseits als unangenehme Geräusche bemerkbar machen, andererseits jedoch verschiedene Bereiche bzw. Bauteile des Antriebsstrangs stark belasten.

Um das Auftreten derartiger Schwingungen zu verhindern bzw. die Schwingungsamplitude zu mindern, ist es bekannt, in Torsionsschwingungsdämpferanordnungen permanent oder verschleppt wirkende Reibeinrichtungen einzusetzen, welche jedoch den Nachteil aufweisen, dass diese im gesamten Drehzahlbereich wirksam sind. Weiterhin ist es bekannt, bei Überschreiten einer bestimmten Relativdrehbeschleunigung zwischen Primärseite und Sekundärseite zumindest einen der Kupplungsbereiche einer Doppelkupplungsanordnung in einen Schlupfzustand zu bringen, also eine sekundärseitig wirkende Reibeinrichtung bereitzuhalten, in deren Bereich durch Gleitreibung Schwingungsenergie dissipiert wird.

Die DE 195 19 363 A1 offenbart die Kombination eines Schwungrads mit einer herkömmlichen Einfachkupplung, bei welcher Kombination eine Reibeinrichtung vorgesehen ist, die vermittels eines Betätigungssystems der Reibungskupplung in vorbestimmten Betriebszuständen aktiviert werden kann.

Es ist die Aufgabe der vorliegenden Erfindung, eine eingangs genannte Drehmomentübertragungsanordnung mit einer Torsionsschwingungsdämpferanordnung und einer Doppelkupplungsanordnung bereitzustellen, bei welcher Maßnahmen zum Verhindern überhöhter Schwingungsamplituden bereitgestellt sind.

Erfindungsgemäß wird diese Aufgabe gelöst durch eine Drehmomentübertragungsanordnung nach Anspruch 1.

Durch das Bereithalten einer wahlweise aktivierbaren Drehzustandbeeinflussungsanordnung für die Sekundärseite wird auch bei der Kombination einer Torsionsschwingungsdämpferanordnung mit einer Doppelkupplungsanordnung dafür gesorgt, dass vor allem beim Durchlaufen der Resonanzfrequenz bzw. des Resonanzbereichs übermäßige Schwingungsamplituden der Relativschwingung zwischen Primärseite und Sekundärseite nicht auftreten. In Phasen, in welchen derartige übermäßige Schwingungen nicht zu erwarten sind, kann die Drehzustandbeeinflussungsanordnung deaktiviert sein bzw. mit verminderter Wirksamkeit aktiviert sein, um in diesen Zuständen eine verbesserte Drehschwingungsentkopplung zu erreichen. In diesem Zustand ist es dann weiterhin möglich, die über die Torsionsschwingungsdämpferanordnung noch übertragenen Schwingungen beispielsweise durch zumindest einen im Schlupfzustand sich befindenden Kupplungsbereich zu dämpfen.

Die erfindungsgemäße Doppelkupplungsanordnung ist derart aufgebaut, dass sie einen mit der Sekundärseite gekoppelten Eingangsbereich, umfassend eine erste Anpressplatte und einen Widerlagerbereich des ersten Kupplungsbereichs und eine zweite Anpressplatte und einen Widerlagerbereich des zweiten Kupplungsbereichs, einen Ausgangsbereich, umfassend eine Kupplungsscheibenanordnung des ersten Kupplungsbereichs, welche mit dem ersten Abtriebsorgan drehfest gekoppelt oder koppelbar ist, und eine Kupplungsscheibenanordnung des zweiten Kupplungsbereichs, welche mit dem zweiten Abtriebsorgan drehfest gekoppelt oder koppelbar ist, sowie in Zuordnung zu dem ersten Kupplungsbereich und zu dem zweiten Kupplungsbereich ein erstes Betätigungssystem bzw. ein zweites Betätigungssystem umfasst.

Um vermittels zumindest eines Betätigungssystems von erstem Betätigungssystem und zweiten Betätigungssystem die Aktivierung der Drehzustandbeeinflussungsanordnung bzw. deren Deaktivierung vornehmen zu können, gleichzeitig aber auch mit diesem Betätigungssystem in erforderlicher Art und Weise den zugeordneten Kupplungsbereich bzw. die zugeordnete Anpressplatte beeinflussen zu können, wird vorgeschlagen, dass das erste Betätigungssystem zur Betätigung der Drehzustandbeeinflussungsanordnung in einen Stellzustand bringbar ist, welcher außerhalb eines zum Verstellen der zugeordneten Anpressplatte zwischen einer Einrückstellung und einer Ausrückstellung vorgesehenen Stellbereichs liegt.

Bei der erfindungsgemäßen Anordnung ist der Aufbau weiter derart, dass das dem ersten Kupplungsbereich zugeordnete Betätigungssystem eine Kraftbeaufschlagungsanordnung umfasst, welche an einer der Positionierung der ersten Anpressplatte bezüglich des Widerlagerbereichs des ersten Kupplungsbereichs entgegengesetzten axialen Seite des Widerlagerbereichs angeordnet ist, sowie eine Betätigungskraftübertragungsanordnung umfasst zur Übertragung einer Betätigungskraft von der Kraftbeaufschlagungsanordnung auf die erste Anpressplatte, wobei die Betätigungskraftübertragungsanordnung oder ein damit gekoppeltes Element zur Beeinflussung der Drehung der Sekundärseite in Wechselwirkung mit der Primärseite bringbar ist.

Bei einer alternativen Ausgestaltungsart wird vorgeschlagen, dass die Drehzustandbeeinflussungsanordnung durch ein von dem ersten Betätigungssystem und dem zweiten Betätigungssystem separat ausgebildetes drittes Betätigungssystem betätigbar ist. Bei einer derartigen Anordnung ist also die Drehzustandbeeinflussungsanordnung völlig unabhängig davon, ob und in welcher Art und Weise die beiden Kupplungsbereiche durch die diesen jeweils zugeordneten Betätigungssysteme aktiviert sind, betätigbar, in ihrem Einsatzspektrum deutlich erweitert. Dabei kann beispielsweise vorgesehen sein, dass das dritte Betätigungssystem ein die Doppelkupplungsanordnung im Wesentlichen axial überbrückendes und durch einen Aktuatorbereich beaufschlagbares Betätigungskraftübertragungsorgan umfasst.

Die vorliegende Erfindung wird nachfolgend mit Bezug auf die beiliegenden Figuren detailliert beschrieben. Es zeigt:
- Fig. 1: eine Prinzip-Längsschnittansicht einer Doppelkupplungsanordnung in Verbindung mit einer Torsionsschwingungsdämpferanordnung;
- Fig. 2: in Diagrammen a) - c) verschiedene Betriebszustände einer mit Belagsfederung ausgestalteten Kupplungsscheibe;
- Fig. 3: eine der Fig. 1 entsprechende Teil-Längsschnittansicht einer Ausgestaltungsform einer erfindungsgemäßen Drehmomentübertragungsanordnung;
- Fig. 4: eine Axialansicht eines bei der in Fig. 3 dargestellten Anordnung eingesetzten Druckrings;
- Fig. 5: eine Ansicht des in Fig. 4 mit Wellenlinie dargestellten Abschnitts in Blickrichtung V;
- Fig. 6: eine der Fig. 3 entsprechende Ansicht einer alternativen Ausgestaltungsform;
- Fig. 7: eine weitere der Fig. 3 entsprechende Ansicht einer alternativen Ausgestaltungsform;
- Fig. 8: eine Detailansicht reibend miteinander in Wechselwirkung tretender Bauteile;
- Fig. 9: eine weitere der Fig. 3 entsprechende Ansicht einer alternativen Ausgestaltungsform;
- Fig. 10: eine nicht erfindungsgemäße Ausgestaltungsform;
- Fig. 11: eine Teil-Axialansicht einer bei der Anordnung der Fig. 10 eingesetzten als Membranfeder ausgebildeten Kraftbeaufschlagungsanordnung;
- Fig. 12: eine alternative Ausgestaltungsform einer Kraftbeaufschlagungsanordnung;
- Fig. 13: eine Teil-Längsschnittansicht einer nicht erfindungsgemäßen Drehmomentübertragungsanordnung.

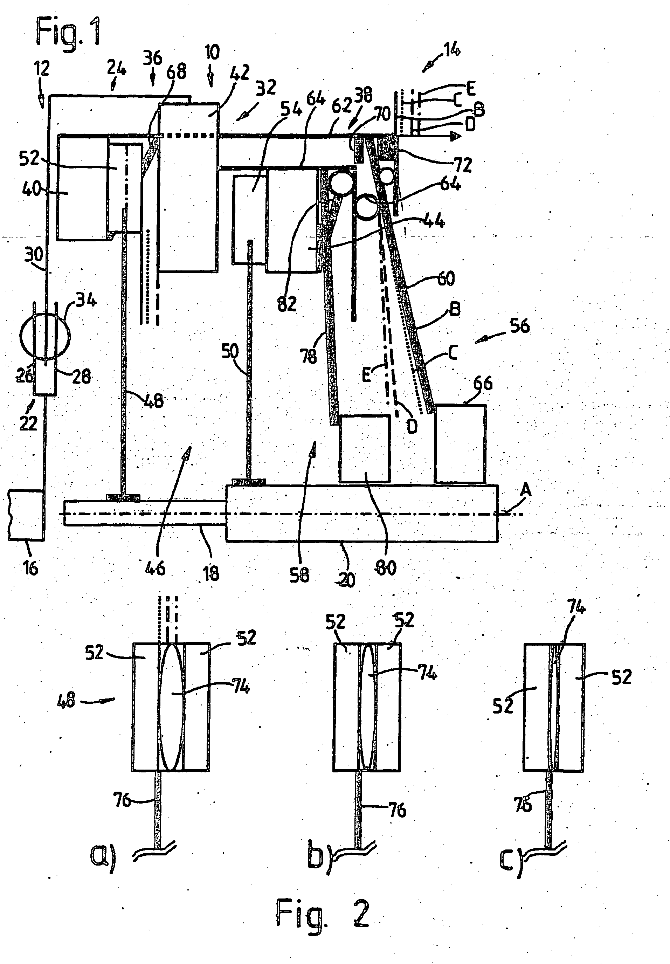

In Fig. 1 ist schematisch eine Drehmomentübertragungsanordnung 10 dargestellt, welche im Wesentlichen zwei Bereiche aufweist. Dies ist zum einen eine Torsionsschwingungsdämpferanordnung 12 und ist zum anderen eine Doppelkupplungsanordnung 14. Durch diese Drehmomentübertragungsanordnung 10 kann ein Antriebsdrehmoment wahlweise zwischen einer Antriebswelle 16, beispielsweise der Kurbelwelle einer Brennkraftmaschine, und einer von zwei koaxial zueinander angeordneten Getriebeeingangswellen 18, 20 übertragen werden, wobei diese Wellen 16, 18, 20 um eine Drehachse A drehbar sind.

Die Torsionsschwingungsdämpferanordnung 12 umfasst eine an die Antriebswelle 16 angekoppelte oder ankoppelbare Primärseite 22 sowie eine Sekundärseite 24. In dem in Fig. 1 schematisch dargestellten Beispiel umfasst die Primärseite 22 wiederum zwei in axialem Abstand zueinander liegende Deckscheibenelemente 26, 28, zwischen welche ein Zentralscheibenelement 30 der Sekundärseite 24 eingreift, das wiederum mit einem allgemein mit 32 bezeichneten Eingangsbereich der Doppelkupplungsanordnung 14 gekoppelt ist. Die Deckscheibenelemente 26, 28 sind über eine Mehrzahl von Dämpferfederelementen 34 drehmomentübertragungsmäßig mit dem Zentralscheibenelement 30 gekoppelt, so dass unter Kompression der beispielsweise in tangentialer Richtung bezüglich der Drehachse A orientierten, bei entsprechender Ausgestaltung aber auch radial positionierbaren, Torsionsdämpferfedern 34 die Primärseite 22 und die Sekundärseite 24 sich bezüglich einander um die Drehachse A drehen können. Die Torsionsschwingungsdämpferanordnung 12 ist also im Wesentlichen als so genanntes Zweimassenschwungrad ausgebildet.

Die Doppelkupplungsanordnung 14 umfasst zwei Kupplungsbereiche 36, 38. Der Eingangsbereich 32 der Doppelkupplungsanordnung 14 umfasst in Zuordnung zum ersten Kupplungsbereich 36 eine erste Anpressplatte 40 sowie dieser axial gegenüber liegend eine Widerlagerplatte 42, die an einer axialen Seite einen Widerlagerbereich des ersten Kupplungsbereichs 36 bereitstellt. Weiter ist diese Widerlagerplatte 42 des Eingangsbereichs 32 auch mit dem Zentralscheibenelement 30 der Sekundärseite 24 der Torsionsschwingungsdämpferanordnung 12 gekoppelt.

In Zuordnung zum zweiten Kupplungsbereich 38 umfasst der Eingangsbereich 32 eine zweite Anpressplatte 44, sowie axial dieser gegenüber liegend wieder die Widerlagerplatte 42, die mit ihrer der Anpressplatte 44 zugewandten Seite den Widerlagerbereich für den zweiten Kupplungsbereich 38 bildet. Das heißt, die Widerlagerplatte 42 bildet also die Widerlageranordnung bzw. die Widerlagerbereiche für beide Kupplungsbereiche 36, 38 und ist zwischen den beiden Anpressplatten 40, 44 positioniert.

Ein Ausgangsbereich 46 der Doppelkupplungsanordnung 14 umfasst in Zuordnung zum ersten Kupplungsbereich 36 eine erste Kupplungsscheibe 48 sowie in Zuordnung zum zweiten Kupplungsbereich 38 eine zweite Kupplungsscheibe 50. Während die Kupplungsscheibe 48 mit ihren Reibbelägen 52 axial zwischen der ersten Anpressplatte 40 und der Widerlagerplatte 42 liegt, liegt die Kupplungsscheibe 50 mit ihren Reibbelägen 54 axial zwischen der zweiten Anpressplatte 44 und der Widerlagerplatte 42. Ferner ist die Kupplungsscheibe 48 des ersten Kupplungsbereichs 36 mit der Getriebeeingangswelle 18 drehfest gekoppelt oder koppelbar. Die Kupplungsscheibe 50 des zweiten Kupplungsbereichs 38 ist mit der Getriebeeingangswelle 20 drehfest gekoppelt oder koppelbar.

In Zuordnung zu den beiden Kupplungsbereichen 36, 38 sind ferner ein erstes Betätigungssystem 56 bzw. ein zweites Betätigungssystem 58 vorgesehen. Das erste Betätigungssystem 56 umfasst eine Kraftbeaufschlagungsanordnung 60, die in einem radial äußeren Bereich auf eine mit der ersten Anpressplatte 40 kraftübertragungsmäßig gekoppelte und die Widerlagerplatte 42 überbrückende Betätigungskraftübertragungsanordnung 62 einwirkt. Die Kraftbeaufschlagungsanordnung 60 kann mehrere Betätigungskraftübertragungshebelelemente umfassen, die untereinander in Umfangsrichtung aufeinander folgend gekoppelt sein können und die im Wesentlichen keinen Eigenkraftbeitrag liefern. Radial weiter innen ist über eine Abstützanordnung 64 die Kraftbeaufschlagungsanordnung 60 an einem Gehäusebereich 64 des Eingangsbereichs 32 axial abgestützt. Am radial inneren Bereich greift ein Betätigermechanismus 66 an der Kraftbeaufschlagungsanordnung 60 an, so dass bei Verschiebung des radial inneren Bereichs derselben diese unter Abstützung im radial mittleren Bereich am Gehäuse 64 der radial äußere Bereich derselben sich in der Darstellung der Fig. 1 nach rechts bewegen wird und dabei die Betätigungskraftübertragungsanordnung 62 und somit auch die Anpressplatte 40 nach rechts bewegen wird, so dass der Einrückzustand erlangt werden kann. Diese Bewegung der Anpressplatte 40 kann entgegen der Krafteinwirkung einer Rückstellelementenanordnung 68, beispielsweise umfassend mehrere Tangentialblattfedern o. dgl., erfolgen, welche für die Überführung der Anpressplatte 40 in den Ausrückzustand sorgt, wenn der Betätigermechanismus 66 das Kraftbeaufschlagungselement 60 freigibt.

In der Fig. 1 sind vier Betätigungs- bzw. Stellzustände des Betätigungssystems 56 des ersten Kupplungsbereichs 36 dargestellt. Die mit Punktlinie C und Strichlinie D gekennzeichneten Bereiche definieren denjenigen Stell- bzw. Verschwenk- oder Verschiebebereich, welcher erforderlich ist, um den Kupplungsbereich 36 zwischen einem vollkommen eingerückten und einem vollkommen ausgerückten Zustand zu verstellen. Der in der Fig. 1 mit B gekennzeichnete und tatsächlich dargestellte Stellzustand liegt außerhalb dieses normalen Stellbereichs und kann dadurch erlangt werden, dass unter der Wirkung der Rückstellelementenanordnung 68 die Anpressplatte 40 und mit dieser die Betätigungskraftübertragungsanordnung 62 so weit in Richtung von der Widerlagerplatte 42 weg und über die vollkommen ausgekuppelte Stellung hinaus verschoben wird, dass auch die im Wesentlichen keinen eigenen Kraftbeitrag liefernde Kraftbeaufschlagungsanordnung 60 entsprechend verschwenkt wird, was auch dadurch möglich wird, dass der Betätigermechanismus 66 in eine entsprechend weit zurückgezogene Stellung gebracht wird. Diese Stellung B kann jedoch auch dadurch erlangt werden, dass aktiv durch Zurückziehen bzw. entsprechende Aktivierung des Betätigermechanismus 66 die Kraftbeaufschlagungsanordnung 60 bzw. die Hebelelemente derselben verschwenkt werden und dabei durch Beaufschlagung eines Anschlagbereichs 70 die Betätigungskraftübertragungsanordnung 62 und somit die Anpressplatte 40 entsprechend weit verschieben.

Durch Verschwenken der Kraftbeaufschlagungsanordnung 60 unter Einwirkung des Betätigermechanismus 66 über die Stellung D hinaus zur Stellung E wird erreicht, dass der radial äußere Bereich der Kraftbeaufschlagungsanordnung 60 unter Beaufschlagung eines Anschlagbereichs 72 an der Kraftbeaufschlagungsanordnung 62 diese und damit auch die Anpressplatte 40 des ersten Kupplungsbereichs 36 in Richtung nach rechts in Fig. 1, d.h. die Anpressplatte 40 in Richtung zur Widerlagerplatte 42 hin, verschiebt. Um hier eine über die vollkommen eingerückte Stellung hinausgehende Verlagerung der Anpressplatte 40 bzw. der Betätigungskraftübertragungsanordnung 62 ermöglichen zu können, ist die Kupplungsscheibe 48 derart ausgebildet, dass eine gewisse axiale Komprimierbarkeit vorgesehen ist. Dies ist in den Diagrammen der Fig. 2 dargestellt, welche den radial äußeren Bereich dieser Kupplungsscheibe 48 darstellt. Die Reibbeläge 52 derselben sind in an sich bekannter Weise über eine Belagsfederung 74 an ein Trägerelement 76 angebunden, wobei diese Belagsfederung beispielsweise als so genannte Doppel-D-Federung ausgebildet sein kann, die einen vergleichsweise großen axialen Hub zulässt. Die Fig. 2a) zeigt dabei den entspannten Zustand, also auch den in der Fig. 1 erkennbaren Zustand, in welchem die Reibbeläge 52 der Kupplungsscheibe 48 nicht zwischen der Anpressplatte 40 und der Widerlagerplatte 42 eingespannt sind. In Fig. 2b) ist der Zustand dargestellt, in welchem nach entsprechender Aktivierung des Betätigermechanismus 66 und Erreichen des Stellzustandes D der erste Kupplungsbereich 36 vollständig eingerückt ist und, wie erkennbar, die Belagsfederung unter entsprechender Annäherung der Reibbeläge 52 entsprechend komprimiert ist. Bei Weiterbewegung in den Stellzustand E wird die Belagsfederung, wie in Fig. 2c) erkennbar, dann noch weiter komprimiert, was eine weitere Annäherung der Anpressplatte 40 an die Widerlagerplatte 42 und eine entsprechende Verschiebung der Betätigungskraftübertragungsanordnung 62 in axialer Richtung unter Beibehalt des Einrückzustands des ersten Kupplungsbereichs 36 mit sich bringt.

Die vorangehend beschriebene Aktivierung bzw. Verstellung des ersten Betätigungssystems 56 des ersten Kupplungsbereichs 36 zur Erlangung des Zustands B oder/und zur Erlangung des Zustands E kann, wie nachfolgend noch detailliert beschrieben, erfindungsgemäß dazu genutzt werden, das Drehverhalten der Sekundärseite 24 der Torsionsschwingungsdämpferanordnung 12 bzw. auch des Eingangsbereichs 32 der Doppelkupplungsanordnung 14 zu beeinflussen und somit beispielsweise das Auftreten von Resonanzschwingungen bei Durchlaufen des Resonanzbereichs der Torsionsschwingungsdämpferanordnung 12 zu verhindern.

Zunächst sei noch ausgeführt, dass auch das zweite Betätigungssystem 58 eine beispielsweise mehrere Betätigungshebelelemente umfassende Kraftbeaufschlagungsanordnung 78 umfasst, die in ihrem radial äußeren Bereich bezüglich des Gehäuses 64 abgestützt ist, radial weiter innen die zweite Anpressplatte 44 des zweiten Kupplungsbereichs 38 beaufschlagt und radial innen unter Einwirkung eines Betätigermechanismus 80 steht. Auch für die zweite Anpressplatte 44 ist eine Rückstellelementenanordnung 82, beispielsweise wiederum eine Tangentialblattfederanordnung, vorgesehen, um bei Freigeben der Kraftbeaufschlagungsanordnung 78 durch den Betätigermechanismus 80 dafür zu sorgen, dass die Anpressplatte 44 in Richtung von der Widerlagerplatte 42 weg bewegt wird.

Wie vorangehend beschrieben, ist es selbstverständlich möglich, bei einem der Kupplungsbereiche 38 anstelle der vorangehend als keinen Eigenkraftbeitrag liefernden Kraftbeaufschlagungsanordnungen 60, 78 Membranfedern o. dgl. einzusetzen, so dass, im Gegensatz zu den dargestellten Kupplungsbereichen des Normal-Offen-Typs dann ein Kupplungsbereich als Normal-Geschlossen-Kupplungsbereich ausgebildet ist. In diesem Falle werden dann durch den Betätigermechanismus 80 keine Einrückkräfte, sondern in Entgegenwirkung zur Kraft des jeweiligen Kraftspeichers Ausrückkräfte geliefert.

Es sei weiter darauf hingewiesen, dass die Stellungen E und B neben den vorangehend bereits angesprochenen Rückstellkräften, die durch irgendwelche Federelemente erreicht werden können, selbstverständlich auch dadurch erreicht werden können, dass der Betätigermechanismus 66 in beiden Richtungen kraftübertragungsmäßig an der Kraftbeaufschlagungsanordnung 60 angreifen kann, um diese sowohl in die Stellung E zu drücken, als auch in die Stellung B zu ziehen.

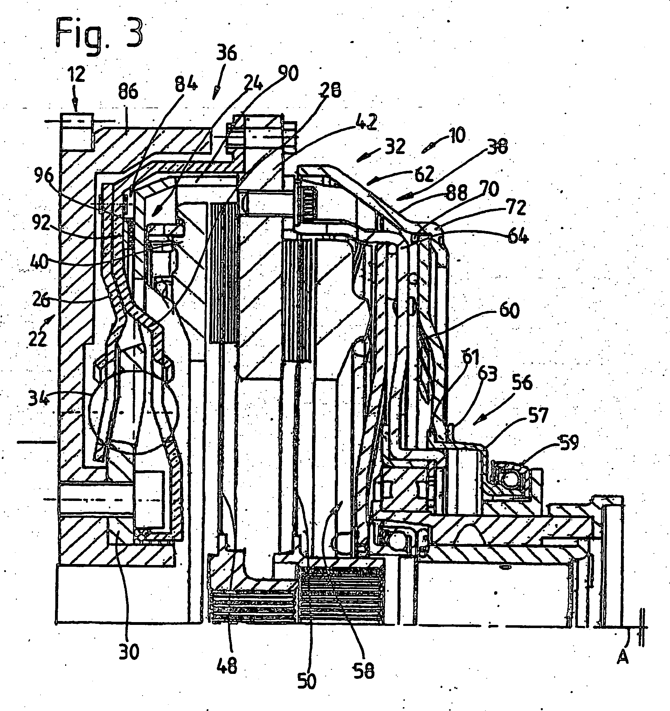

In Fig. 3 ist eine Ausgestaltungsform einer Drehmomentübertragungsanordnung 10 gezeigt, bei welcher dadurch, dass die Betätigungskraftübertragungsanordnung 62 derselben in die vorangehend in Fig. 1 mit dem Bezugszeichen D bezeichnete Stellung gelangt, eine Reibeinrichtung 84 nicht aktiviert ist und der Kupplungsbereich 36 im Drehmomentübertragungszustand ist. Der prinzipielle Aufbau dieser Drehmomentübertragungsanordnung 10 entspricht dem vorangehend Beschriebenen. Insbesondere sei darauf hingewiesen, dass bei der in Fig. 3 dargestellten Ausgestaltungsform in Umkehr zur Ausgestaltungsform gemäß Fig. 1 das Zentralscheibenelement 30 in Verbindung mit einem Primärmasseteil 86 die Primärseite 22 der Torsionsschwingungsdämpferanordnung 12 bildet, während die beiden als Blechumformteile bereitgestellten Deckscheibenelemente 26, 28 die Sekundärseite 24 im Wesentlichen bereitstellen. Diesbezüglich sei weiter darauf hingewiesen, dass das Zentralscheibenelement 30 über seinen Bereich der Wechselwirkung mit den Federn 34 nach radial außen verlängert ist und mit in der Fig. 3 nicht erkennbaren Armabschnitten in in Umfangsrichtung ausgebildete Aussparungen in den Deckscheibenelementen 26, 28 eingreift, wodurch gleichzeitig auch eine Drehwinkelbegrenzung vorgesehen ist. Weiterhin ist erkennbar, dass die Betätigungskraftübertragungsanordnung 62 zwei schalenartige Bauteile 88, 90 umfasst, die miteinander durch Verklemmung, Verlötung, Verschweißen o. dgl. verbunden sind, wobei das auch die Widerlagerplatte 42 axial überbrückende Teil 90 auf die Anpressplatte 40 über eine Verschleißnachstelleinrichtung einwirkt. Ansonsten entspricht im Wesentlichen der Aufbau dem vorangehend beschriebenen Aufbau der Fig. 1.

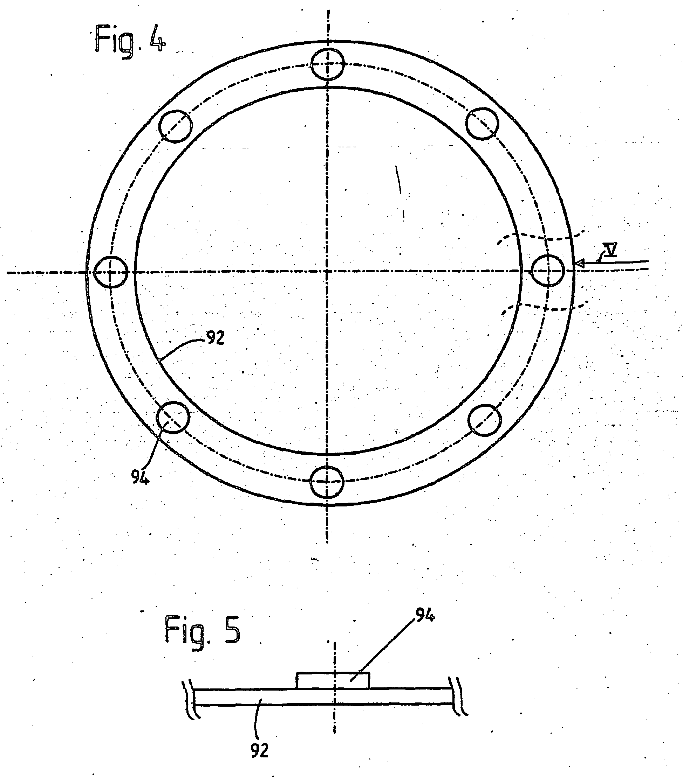

Die im Wesentlichen eine Drehzustandbeeinflussungsanordnung für die Sekundärseite 24 bereitstellende Reibeinrichtung 84 umfasst einen Druckring 92, wie er beispielsweise in Fig. 4 dargestellt ist. Dieser Druckring 92 weist an mehreren Umfangspositionen Abstützbereiche 94 auf, mit welchen dieser an den vorangehend angesprochenen nach radial außen greifenden Abschnitten des Zentralscheibenelements 30 abgestützt bzw. festgelegt ist. Diese Abstützung bzw. Festlegung kann reibschlüssig, materialschlüssig oder formschlüssig erfolgen, so dass in jedem Falle eine Umfangskopplung zwischen dem Druckring 92 und dem Zentralscheibenelement 30, also der Primärseite 22 der Torsionsschwingungsdämpferanordnung 12, vorhanden ist. Ferner umfasst die Reibeinrichtung 84 einen Reibring 96, der beispielsweise an dem Druckring 92 festgelegt sein kann und an welchemdas Bauteil 90 der Betätigungskraftübertragungsanordnung 62 bei entsprechender Axialverlagerung derselben in Anlage kommen kann.

Man erkennt ferner in Fig. 3 die beiden Anschlagbereiche 70, 72, durch welche sichergestellt ist, dass je nach Beaufschlagungsrichtung der Kraftbeaufschlagungsanordnung 60 diese die Rückstellelementenanordnung in einer entsprechenden Richtung verschiebt bzw. beaufschlagt. Dabei kann der Anschlagbereich 70 durch einen Einlagering gebildet sein, der beispielsweise in eine nutartige Einsenkung eingreifen kann, während der Anschlagbereich 72 durch einen Bodenbereich des im Allgemeinen topfartig ausgestalteten schalenartigen Bauteils 88 gebildet sein kann.

Weiterhin erkennt man am radial inneren Bereich der Kraftbeaufschlagungsanordnung 60, dass auch dort diese Kraftbeaufschlagungsanordnung 60 zur Wechselwirkung in beiden axialen Richtungen mit einem Ausgangsteil 57 eines Axiallagers 59 des Betätigungssystems 56 zusammenwirkt. Hierzu kann das Teil 57 die Kraftbeaufschlagungsanordnung 60 an ihrem radial inneren Bereich an den beiden axialen Seiten übergreifende, nach radial außen sich erstreckende Abschnitte 61, 63 aufweisen. Diese können integral an ein und dem selben Bauteil durch Bereitstellen entsprechend nach radial außen gebogener Lappenabschnitte gebildet sein. Zumindest die Abschnitte. 61 können jedoch an einem separaten und mit dem Bauteil 57 fest verbundenen Bauteil ausgebildet sein.

Wird also das Betätigungssystem 56 derart aktiviert oder verstellt, ggf. auch unter der Einwirkung der vorangehend angesprochenen Rückstellelementenanordnung 68, dass sie in den Zustand B gelangt, so wird das Teil 90 der Betätigungskraftübertragungsanordnung 62 axial auf den Reibring 96 zu bewegt und dadurch die Reibeinrichtung 84 aktiviert, und es wird zwischen der Primärseite 22 der Torsionsschwingungsdämpferanordnung 12 und im dargestellten Falle der Betätigungskraftübertragungsanordnung 62 des Betätigungssystems 56 eine Reibkraft aufgebaut. Dieses gesamte Betätigungssystem ist jedoch grundsätzlich dem Eingangsbereich 32 der Doppelkupplungsanordnung 14 zuzuordnen, welcher wiederum fest verbunden ist mit der Sekundärseite 24 der Torsionsschwingungsdämpferanordnung 12. Das heißt, durch Aktivierung der Reibeinrichtung 84 wird dafür gesorgt, dass einer Relativdrehung der Primärseite 22 bezüglich der Sekundärseite 24 entgegengewirkt wird. Dies kann beispielsweise im Anlasszustand bei Durchlaufen des Resonanzbereichs der Torsionsschwingungsdämpferanordnung 12 der Fall sein. Nach Durchlaufen dieses Bereichs und Eintreten in einen Bereich, in welchem derart starke Schwingungsanregungen nicht mehr zu erwarten sind, kann durch entsprechende Ansteuerung des Betätigungssystems 56 dieses wieder in den Bereich C - D gebracht werden, um insbesondere den Kupplungsbereich 36 wieder in herkömmlicher Weise ansteuern zu können. Es ist selbstverständlich, dass bei entsprechender kraftmäßiger Abstützung der Kraftbeaufschlagungsanordnung 60, d.h. im dargestellten Beispiel von Hebelelementen o. dgl., an der Betätigungskraftübertragungsanordnung 62 auch durch das Betätigungssystem 56 ein Kraftbeitrag zum Aktivieren der Reibeinrichtung 84 erzeugt werden kann.

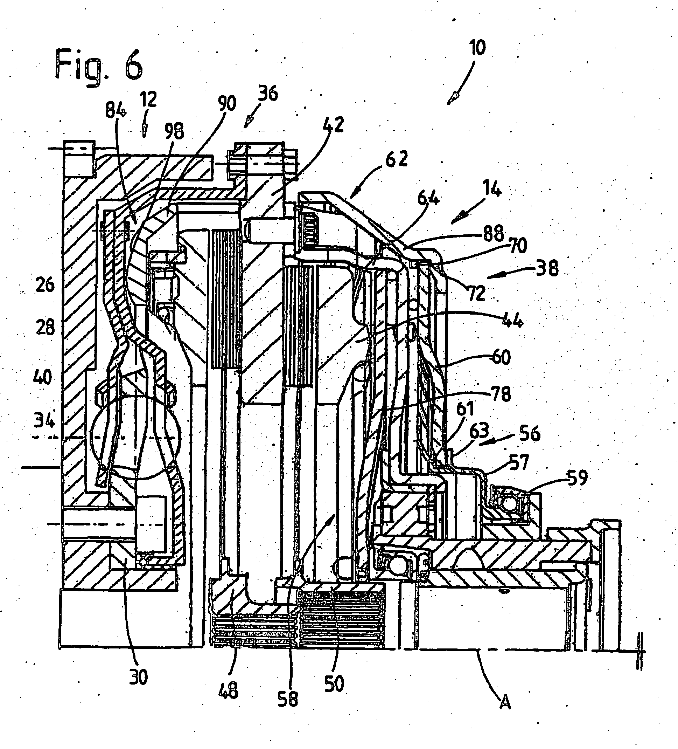

Eine Abwandlung der vorangehend geschilderten Ausgestaltungsform ist in Fig. 6 gezeigt. Es wird nachfolgend nur auf die Unterschiede eingegangen. Man erkennt hier, dass das Teil 90 der Betätigungskraftübertragungsanordnung 62 hier mit einem Rückenbereich 98 einen reibend wirksam werdenden Abschnitt der Reibeinrichtung 84 bildet, der beispielsweise unmittelbar in Anlage an den in der Fig. 6 nicht erkennbaren und nach radial außen greifenden Abschnitten des Zentralscheibenelements 30 gelangen kann. Hier kann also vorgesehen sein, dass ein direkter Stahl-Stahl-Kontakt der reibend aneinander anliegenden Bauteile erzeugt wird. Selbstverständlich ist auch hier das Vorsehen eines Druckrings 92, wie er vorangehend geschildert wurde, möglich.

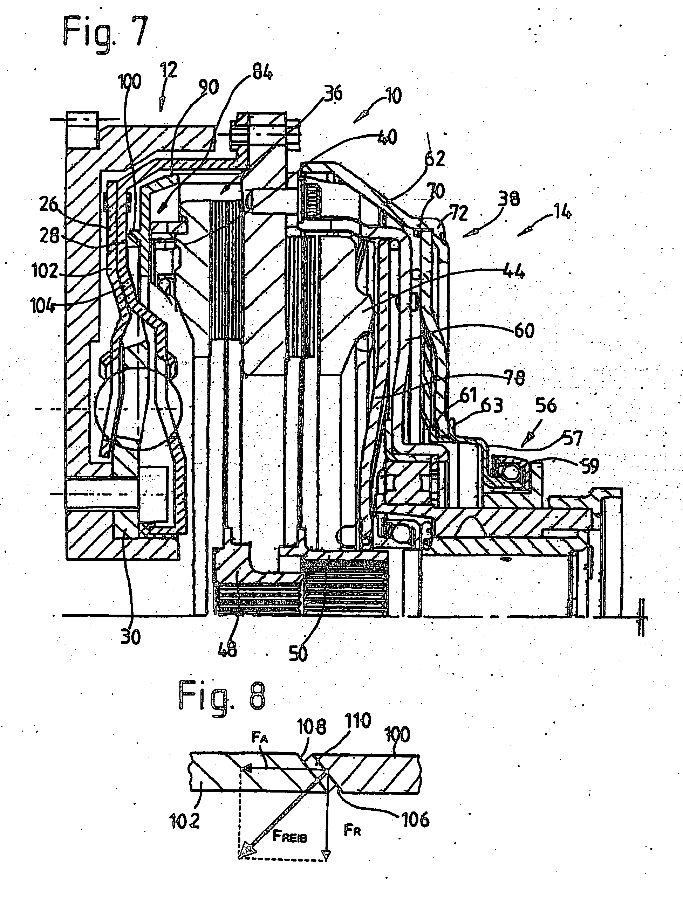

Bei der in Fig. 7 dargestellten Ausgestaltungsvariante ist an dem Bauteil 90 der Betätigungskraftübertragungsanordnung 62 ein Reibabschnitt 100 der Reibeinrichtung 84 vorgesehen, welchem ein Gegen-Reibabschnitt 102 an den nach radial außen greifenden Abschnitten 104 des Zentralscheibenelements 30 gegenüberliegt. Man erkennt in der vergrößerten Darstellung der Fig. 8, dass diese Abschnitte 100, 102 in Umfangsrichtung wenigstens bereichsweise ringartig umlaufende, konische (vorzugsweise mit einem Winkel von 45°), also zu einer Axial- bzw. Radialrichtung geneigte Anlageflächen 106, 108 aufweisen, wobei an einer dieser Anlageflächen 106, 108 ein Reibring 110 vorgesehen sein kann. Die bei Axialverlagerung der Betätigungskraftübertragungsanordnung 62 erzeugte Axialkraft F_{A} erzeugt dabei eine zusätzliche radiale Abstützkomponente mit einer entsprechenden Radialkraft F_{R}, so dass sich eine zu den beiden Flächen 106, 108 orthogonale Reibkraft F_{REIB} ergibt, die betragsmäßig größer ist als die Axialkraft F_{A}. Es kann somit eine Reibmomentenerhöhung erlangt werden.

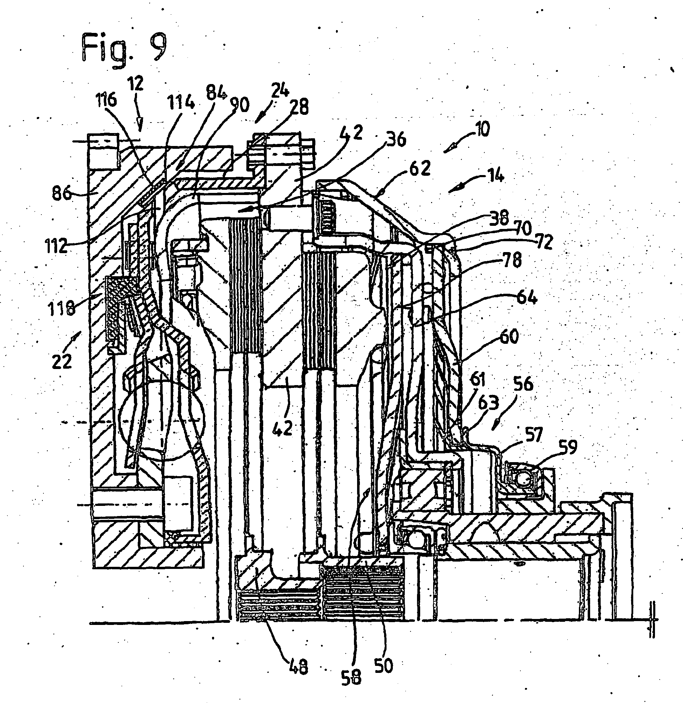

Bei der Ausgestaltungsform gemäß Fig. 9 sind an dem Bauteil 90 der Betätigungskraftübertragungsanordnung 62 durch das an die Widerlagerplatte 42 beispielsweise durch Verschraubung angebundene Deckscheibenelement 28 hindurchgreifende Anlagevorsprünge 112 vorgesehen. Diese beaufschlagen beispielsweise einen Druckring 114, der beispielsweise unter Zwischenlagerung eines Reibrings 116 gegen das Primärmasseteil 86 drücken kann. Auch hier ist wieder eine Schrägstellung der reibend miteinander in Wechselwirkung tretenden Oberflächen vorhanden mit dem vorangehend angesprochenen Effekt der Reibkrafterhöhung. Weiter erkennt man, dass durch diese Anordnung eine Verlagerung der reibend wirksamen Oberfläche nach radial außen bewirkt werden kann, womit zusätzlich eine Reibmomentenerhöhung eingeführt werden kann.

Sowohl bei den vorangehend beschriebenen Ausgestaltungsformen als auch bei der in Fig. 9 gezeigten Ausgestaltungsform kann vorgesehen sein, dass die Reibeinrichtung eine der Drehung der Sekundärseite bezüglich der Primärseite entgegenwirkende Krafteinwirkung nicht durch Gleitreibung oder Haftreibung, sondern durch Formschlusseingriff erfolgt. So könnte beispielsweise an dem Primärmasseteil 86 der Fig. 9 eine Verzahnung vorgesehen sein, in welche eine entsprechende Verzahnung des Druckrings 114 im aktivierten Zustand eingreift. Bei Aktivierung dieser "Reibeinrichtung" 84 wäre dann die Primärseite 22 bezüglich der Sekundärseite 24 überhaupt nicht mehr drehbar. Dies kann dazu genutzt werden, in einem Zustand, in welchem ein Antriebsaggregat nicht aktiviert ist, diesen Blockierzustand herzustellen, so dass beim Anlassen des Antriebsaggregats die Gefahr, dass durch übermäßige Relativdrehung zwischen Primärseite und Sekundärseite Resonanzschwingungen aufgebaut werden, vollkommen eliminiert ist. Um auch im Zustand, in welchem das Antriebsaggregat abgestellt wird, dafür zu sorgen, dass eine entsprechende Schwingungsdämpfung vorgesehen ist, kann eine zusätzliche permanent bzw. ggf. auch verschleppt wirkende Reibeinrichtung 118 vorgesehen sein, die aufgrund der Tatsache, dass beim Abstellen ein wesentlicher Momentenbeitrag zur Schwingungsanregung vom Antriebsaggregat nicht mehr geliefert wird, eine deutlich geringere Reibwirkung aufweisen kann.

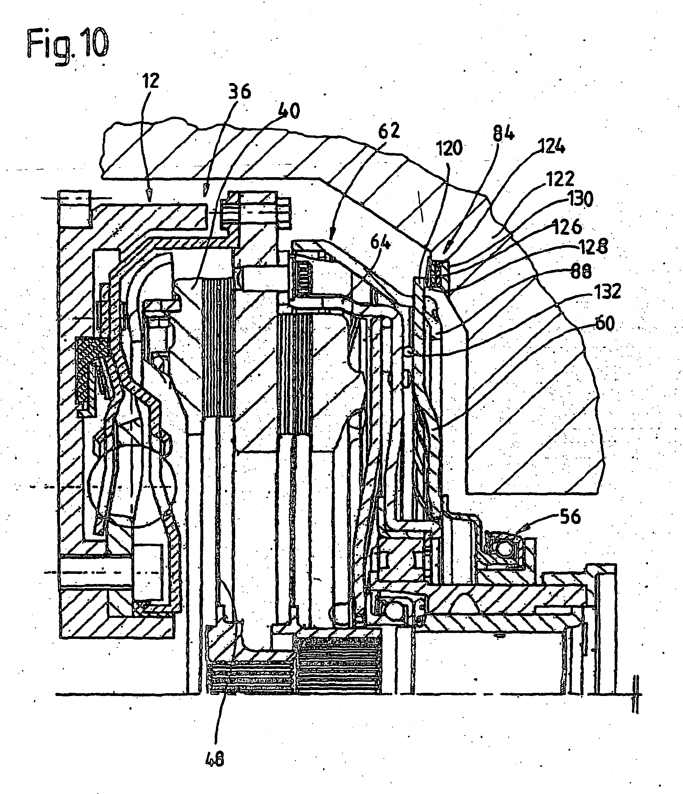

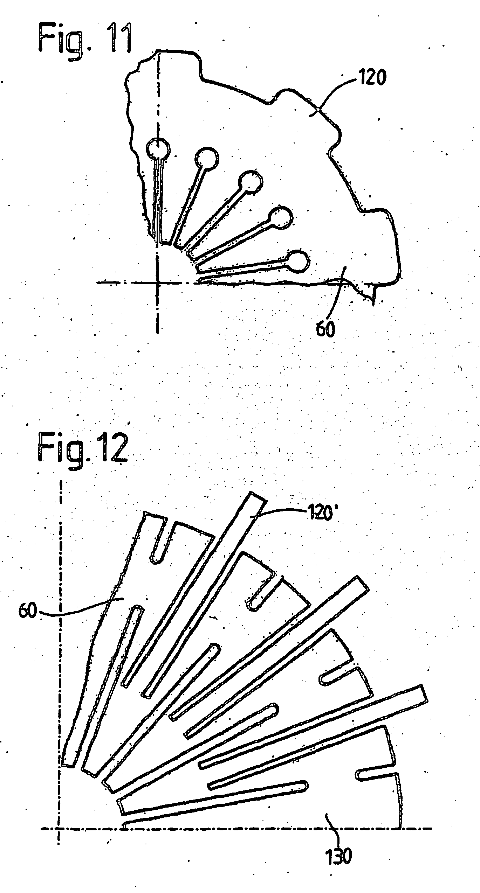

In Fig. 10 ist eine nicht erfindungsgemäße Ausgestaltungsform gezeigt, bei welcher die Reibeinrichtung 84 dann aktiv ist oder aktiv wird, wenn die Betätigungskraftübertragungsanordnung 62 bzw. das genannte Betätigungssystem 56 in den Stellzustand E gelangt. Man erkennt, dass die Kraftbeaufschlagungsanordnung 60 hier über deren Anlage am Bauteil 88 der Betätigungskraftübertragungsanordnung 62 hinausgehende Abschnitte 120 aufweist, die in Fig. 11 auch erkennbar sind. An einem Getriebegehäuse 122 o. dgl. ist ein Reibring 124 abgestützt, der unter der Einwirkung dieser Abschnitte 120 der Kraftbeaufschlagungsanordnung 60 und eines Druckrings 126 dann reibend wirksam wird, wenn der Zustand E erreicht wird oder ein Übergang in den Zustand E auftritt. Durch eine Tellerfeder 128 o. dgl. kann dafür gesorgt werden, dass der Druckring 126 und der Reibring 124 unabhängig von der Stellposition der Kraftbeaufschlagungsanordnung 60 in einer definierten Einbaulage verbleiben. Um bei diesem System entstehende Reibwärme verbessert aufnehmen bzw. abführen zu können, kann ein aus Metall aufgebauter Anlagering 130 an dem Getriebegehäuse 122 abgestützt sein.

Bei der in Fig. 10 dargestellten Anordnung wird also die Reibeinrichtung 84 dann wirksam, wenn im ersten Kupplungsbereich 36 über die zum Erlangen der Einrückstellung erforderliche Stellung C hinaus das Betätigungssystem 56 weiter verstellt wird, was dann möglich ist, wenn die Axialverlagerung der Anpressplatte 40 und der damit gekoppelten Betätigungskraftübertragungsanordnung 62 unter Kompression der Belagsfederung 74 von Reibbelägen 52 der Kupplungsscheibe 48 möglich ist, wie dies vorangehend mit Bezug auf die Fig. 2 beschrieben wurde. Alternativ ist es auch möglich, die Kraftbeaufschlagungsanordnung 60 so auszugestalten, dass diese grundsätzlich elastisch verformbar ist, wie dies auch bei einer Membranfeder der Fall ist, darüber hinaus jedoch nach radial außen greifende verlängerte Abschnitte 120' im Bereich zwischen den bezüglich des Gehäuses 64 einerseits und der Kraftbeaufschlagungsanordnung 62 andererseits abgestützten Hebelabschnitten 130 aufweist. Ist der Kupplungsbereich 36 im vollkommen eingerückten Zustand, in welchem beispielsweise nach entsprechender Kompression einer Belagsfederung 74 die Anpressplatte 40 an einen Axialanschlag anstoßen kann oder aber auch die Betätigungskraftübertragungsanordnung 62 an einen entsprechenden Axialanschlag anstoßen kann, wird durch weitere Aktivierung oder anhaltende Aktivierung des Betätigermechanismus 66 des Betätigungssystems 56 die Kraftbeaufschlagungsanordnung 60 im Bereich ihrer Hebelabschnitte 130 weiter verformt, so dass durch die radial außen dann auftretende Verlagerung der Abschnitte 120' die Reibeinrichtung 84 aktiviert werden kann. Dabei stützt sich die Kraftbeaufschlagungsanordnung zum Ermöglichen dieser weitergehenden Verformung über einen Drahtring 132 am Gehäuse 64 ab.

Man erkennt als wesentlichen Unterschied der Ausgestaltungsform gemäß Fig. 10, dass hier eine Beeinflussung der Sekundärseite 24 der Torsionsschwingungsdämpferanordnung 12 dadurch erfolgt, dass deren Drehung bezüglich einer feststehenden Komponente, nämlich beispielsweise des Getriebegehäuses 122, beeinflusst wird, wodurch ebenfalls im Bereich der Torsionsschwingungsdämpferanordnung 12 entstehende Schwingungsanregungen gemindert werden können. Selbstverständlich ist es möglich, die Ausgestaltungsform gemäß Fig. 10 mit den Ausgestaltungsformen gemäß den Fig. 3 - 9 zu kombinieren, so dass sowohl im Einrückzustand als auch im Ausrückzustand des Kupplungsbereichs 36 die Reibeinrichtung 84 aktiviert werden kann.

Es sei noch einmal darauf hingewiesen, dass in allen vorangehend beschriebenen Ausgestaltungsformen die Kraftbeaufschlagungsanordnung 60 des ersten Betätigungssystems 56, wie vorangehend geschildert, eine als Hebelanordnung ausgebildet ist, die zwar grundsätzlich elastisch sein kann, aber keinen wesentlichen Eigenkraftbeitrag liefert, so dass durch den Betätigermechanismus 56 eine Einrückkraft geliefert werden muss. Zum Erlangen der Zustände B bzw. E kann dann durch den Betätigermechanismus an dieser Kraftbeaufschlagungsanordnung in zumindest einer Richtung ziehend oder drückend angegriffen werden.

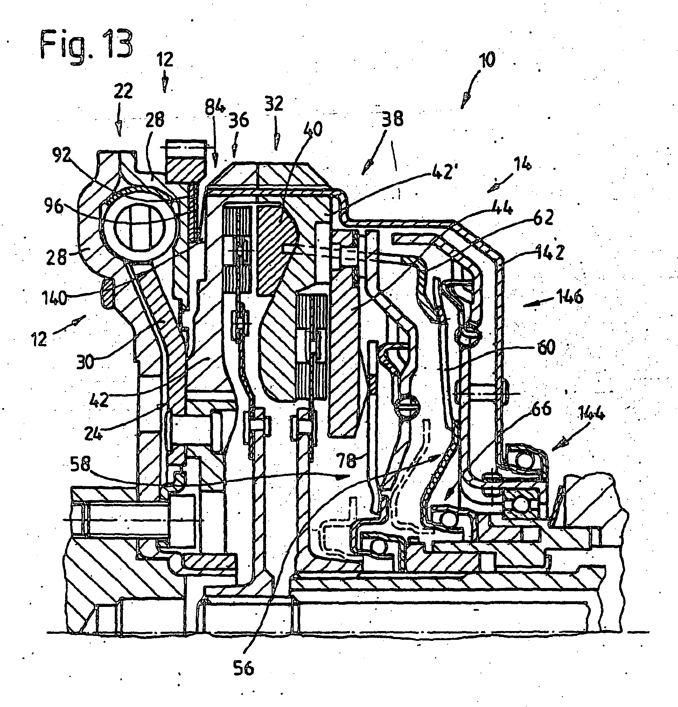

In Fig. 13 ist eine nicht erfindungsgemäße Ausgestaltungsform gezeigt, bei welcher zwei axial aufeinander folgende Widerlagerplatten 42, 42' die Widerlagerbereiche für die beiden Kupplungsbereiche 36, 38 bilden, deren Anpressplatten 40, 44 nunmehr zur Erlangung des Einrückzustands in der gleichen axialen Richtung zu verschieben sind. Die Widerlagerplatte 42, welche den Widerlagerbereich für den Kupplungsbereich 36 bildet, ist in ihrem radial inneren Bereich mit dem Zentralscheibenelement 30 der Torsionsschwingungsdämpferanordnung 12 gekoppelt. Zwischen dem Deckscheibenelement 28 und der Widerlagerplatte 42 liegt die Reibeinrichtung 84, die auch hier einen Druckring 92 und einen Reibring 96 aufweist. Durch eine Tellerfeder 140, Wellfeder o. dgl. sind diese Bauteile unter Vorspannung aneinander gehalten. Ein beispielsweise topfartig ausgebildetes Betätigungskraftübertragungselement 142 durchsetzt in den Widerlagerplatten 42, 42' vorgesehene Öffnungen und ist durch einen nur in Form eines Betätigerlagers 144 erkennbaren Betätigermechanismus in axialer Richtung verschiebbar. Bei Aktivierung dieses Betätigungssystems 146 presst das Betätigungskraftübertragungselement 142 auf den Reibring 92, so dass dieser am Druckring 96 reibend wirksam wird und wieder zu einer Dämpfung zwischen der Primärseite 22 und der Sekundärseite 24 beiträgt. Es ist selbstverständlich, dass die Anordnung von Reibring und Druckring in axialer Richtung hier umgekehrt sein kann.

Der Vorteil dieser Ausgestaltungsform ist, dass ein von den Betätigungssystemen 56, 58 der Kupplungsbereiche 36, 38 unabhängiges drittes Betätigungssystem 146 zur entsprechend unabhängigen Aktivierung bzw. Deaktivierung der Reibeinrichtung 84 vorgesehen ist, die selbstverständlich auch hier durch Formschlusseingriff bzw. entsprechend große Reibkraft eine Drehung zwischen der Primärseite 22 und der Sekundärseite 24 vollständig unterbinden kann.

Vorangehend ist mit Bezug auf die verschiedenen Ausgestaltungsformen die Torsionsschwingungsdämpferanordnung als so genanntes trockenlaufendes Zweimassenschwungrad dargestellt worden. Selbstverständlich kann die Torsionsschwingungsdämpferanordnung auch nasslaufend sein, d.h. die Dämpferelementenanordnung derselben kann zumindest bereichsweise in eine nach radial außen im Wesentlichen fluiddicht abgebildete Schmiermittelkammer eintauchen, um einerseits einen zusätzlichen Dämpfungsbeitrag durch Verdrängung viskosen Mediums zu erlangen, und andererseits die dann mit längerer Umfangserstreckung ausgebildeten Federn bei geringerer Gleitreibungswechselwirkung nach radial außen hin abstützen zu können. Des Weiteren sei darauf hingewiesen, dass die verschiedenen Betätigermechanismen der beschriebenen Betätigersysteme hydraulisch, pneumatisch, elektrisch oder auch mechanisch wirksam sein können, um die entsprechenden, im Wesentlichen axial gerichteten Betätigungskräfte darin erzeugen zu können.

Die Aktivierung der vorangehend beschriebenen Reibeinrichtung zum Einführen einer das Drehverhalten der Sekundärseite bzw. des Eingangsbereichs der Doppelkupplung beeinflussenden Reibkraft bzw. zum Herstellen eines Formschlusses zwischen der Primärseite und der Sekundärseite kann selbstverständlich auch gemäß verschiedenen Betriebszustände charakterisierenden Parametern vorgenommen werden. Hierzu kann eine Ansteuervorrichtung für die Betätigersysteme entsprechende Eingangsgrößen erhalten und beruhend darauf Ansteuerbefehle erzeugen, um die Reibeinrichtung aktivieren bzw. deaktivieren zu können.

## Patentansprüche

1. Drehmomentübertragungsanordnung, umfassend eine Torsionsschwingungsdämpferanordnung (12) mit einer an ein Antriebsorgan (16) anzubindenden Primärseite (22) und einer gegen die Wirkung einer Dämpferelementenanordnung (34) um eine Drehachse (A) bezüglich der Primärseite (22) drehbaren Sekundärseite (24), eine Doppelkupplungsanordnung (14), welche mit der Sekundärseite (24) der Torsionsschwingungsdämpferanordnung (12) gekoppelt ist und einen ersten Kupplungsbereich (36) zur wahlweisen Drehmomentübertragungskopplung mit einem ersten Abtriebsorgan (18) und einen zweiten Kupplungsbereich (38) zur wahlweisen Drehmomentübertragungskopplung mit einem zweiten Abtriebsorgan (20) aufweist, sowie eine wahlweise aktivierbare Drehzustandbeeinflussungsanordnung (84) für die Sekundärseite (24) zur Beeinflussung von deren Drehbewegung bezüglich der Primärseite (22), wobei die Doppelkupplungsanordnung (14) einen mit der Sekundärseite gekoppelten Eingangsbereich (32), umfassend eine erste Anpressplatte (40) und einen Widerlagerbereich (42) des ersten Kupplungsbereichs (36) und eine zweite Anpressplatte (44) und einen Widerlagerbereich (42; 42, 42') des zweiten Kupplungsbereichs (38), einen Ausgangsbereich (46), umfassend eine Kupplungsscheibenanordnung (48) des ersten Kupplungsbereichs (46), welche mit dem ersten Abtriebsorgan (18) drehfest gekoppelt oder koppelbar ist, und eine Kupplungsscheibenanordnung (50) des zweiten Kupplungsbereichs (38), welche mit dem zweiten Abtriebsorgan (20) drehfest gekoppelt oder koppelbar ist, sowie in Zuordnung zu dem ersten Kupplungsbereich (36) und zu dem zweiten Kupplungsbereich (38) ein erstes Betätigungssystem (56) bzw. ein zweites Betätigungssystem (58) umfaßt,
**dadurch gekennzeichnet,**
**dass** das dem ersten Kupplungsbereich (36) zugeordnete Betätigungssystem (56) eine keinen Eigenkraftbeitrag liefernde, als Hebelanordnung ausgebildete, Kraftbeaufschlagungsanordnung (60) umfasst, welche an einer der Positionierung der ersten Anpressplatte (40) bezüglich des Widerlagerbereichs (42) des ersten Kupplungsbereichs (36) entgegengesetzten axialen Seite des Widerlagerbereichs (42) angeordnet ist, sowie eine Betätigungskraftübertragungsanordnung (62) umfasst zur Übertragung einer Betätigungskraft von der Kraftbeaufschlagungsanordnung (60) auf die erste Anpressplatte (40) gegen die Kraftwirkung einer Rückstellelementanordnung (68), zur Erlangung eines Einrückzustandes des ersten Kupplungsbereichs (36) wobei die Betätigungskraftübertragungsanordnung (62) oder ein damit gekoppeltes Element unter Einwirkung der Rückstellelementanordnung (68), zur Beeinflussung der Drehung der Sekundärseite (24) in Wechselwirkung mit der Primärseite (22) bringbar ist.

2. Drehmomentübertragungsanordnung nach Anspruch 1,
**dadurch gekennzeichnet, dass** das erste Betätigungssystem (56) zur Betätigung der Drehzustandbeeinflussungsanordnung (84) in einen Stellzustand (B,) bringbar ist, welcher außerhalb eines zum Verstellen der zugeordneten Anpressplatte (40) zwischen einer Einrückstellung und einer Ausrückstellung vorgesehenen Stellbereichs ( C - D) liegt.

## Claims

1. Torque transmission arrangement, comprising a torsional-vibration damper arrangement (12) with a primary side (22) to be tied up to a drive member (16) and with a secondary side (24) rotatable about an axis of rotation (A) with respect to the primary side (22) counter to the action of a damper element arrangement (34), a double clutch arrangement (14) which is coupled to the secondary side (24) of the torsional-vibration damper arrangement (12) and which has a first clutch region (36) for selective torque transmission coupling to a first output member (18) and a second clutch region (38) for selective torque transmission coupling to a second output member (20), and also a selectively activatable rotary-state influencing arrangement (84) for the secondary side (24) for influencing the rotational movement of the latter with respect to the primary side (22), wherein the double clutch arrangement (14) comprises an input region (32) coupled to the secondary side and comprising a first pressure plate (40) and an abutment region (42) of the first clutch region (36) and a second pressure plate (44) and an abutment region (42; 42, 42') of the second clutch region (38), an output region (46) comprising a clutch disk arrangement (48) of the first clutch region (46), said clutch disk arrangement being coupled or couplable fixedly in terms of rotation to the first output member (18), and a clutch disk arrangement (50) of the second clutch region (38), said clutch disk arrangement being coupled or couplable fixedly in terms of rotation to the second output member (20), and also, in assignment to the first clutch region (36) and to the second clutch region (38), a first actuating system (56) and a second actuating system (58), respectively, **characterized in that** the actuating system (56) assigned to the first clutch region (36) comprises a force application arrangement (60) which contributes no intrinsic force, is designed as a lever arrangement and which is arranged on one axial side of the abutment region (42), said axial side being opposite the positioning of the first pressure plate (40) with respect to the abutment region (42) of the first clutch region (36), and comprises an actuating-force transmission arrangement (62) for transmitting an actuating force from the force application arrangement (60) to the first pressure plate (40), counter to the force action of a restoring element arrangement (68), in order to attain an engaged state of the first clutch region (36), the actuating-force transmission arrangement (62) or an element coupled to it being capable, for influencing the rotation of the secondary side (24), of being brought into interaction with the primary side (22) under the action of the restoring element arrangement (68).

2. Torque transmission arrangement according to Claim 1, **characterized in that**, for the actuation of the rotary-state influencing arrangement (84), the first actuating system (56) is capable of being brought into a regulating state (B,) which lies outside a regulating range (C - D) provided for adjusting the assigned pressure plate (40) between an engagement position and a disengagement position.

## Revendications

1. Agencement de transfert de couple, comprenant un agencement d'amortisseur d'oscillations de torsion (12) avec un côté primaire (22) à relier à un organe d'entraînement (16) et un côté secondaire (24) pouvant tourner autour d'un axe de rotation (A) par rapport au côté primaire (22) à l'encontre de l'effet d'un agencement d'éléments amortisseurs (34), un agencement de double embrayage (14), qui est accouplé au côté secondaire (24) de l'agencement d'amortisseur d'oscillations de torsion (12) et qui présente une première région d'embrayage (36) pour l'accouplement sélectif de transfert de couple avec un premier organe de sortie (18) et une deuxième région d'embrayage (38) pour l'accouplement sélectif de transfert de couple avec un deuxième organe de sortie (20), ainsi qu'un agencement influençant l'état de rotation (84) pouvant être activé pour le côté secondaire (24) afin d'influencer son mouvement de rotation par rapport au côté primaire (22), l'agencement de double embrayage (14) comprenant une région d'entrée (32) accouplée au côté secondaire, comprenant un premier plateau de pression (40) et une région de butée (42) de la première région d'embrayage (36) et un deuxième plateau de pression (44) et une région de butée (42 ; 42, 42') de la deuxième région d'embrayage (38), une région de sortie (46), comprenant un agencement de disque d'embrayage (48) de la première région d'embrayage (46), qui est accouplé ou qui peut être accouplé de manière solidaire en rotation au premier organe de sortie (18), et un agencement de disque d'embrayage (50) de la deuxième région d'embrayage (38), qui est accouplé ou qui peut être accouplé de manière solidaire en rotation au deuxième organe de sortie (20), ainsi qu'un premier système d'actionnement (56) ou un deuxième système d'actionnement (58) en association avec la première région d'embrayage (36) et la deuxième région d'embrayage (38), **caractérisé en ce que** le système d'actionnement (56) associé à la première région d'embrayage (36) comprend un agencement de sollicitation de force (60), réalisé sous forme d'agencement de levier et ne fournissant aucune contribution de force propre, qui est disposé sur un côté axial de la région de butée (42) opposé au positionnement du premier plateau de pression (40) par rapport à la région de butée (42) de la première région d'embrayage (36), et comprend un agencement de transfert de force d'actionnement (62) pour le transfert d'une force d'actionnement de l'agencement de sollicitation de force (60) au premier plateau de pression (40) à l'encontre de l'action de la force d'un agencement d'élément de rappel (68), pour obtenir un état d'embrayage de la première region d'embrayage (36), l'agencement de transfert de force d'actionnement (62) ou un élément accouplé à celui-ci, sous l'action de l'agencement d'élément de rappel (68), pouvant être amené, pour influencer la rotation du côté secondaire (24), en interaction avec le côté primaire (22).

2. Agencement de transfert de couple selon la revendication 1, **caractérisé en ce que** le premier système d'actionnement (56), pour l'actionnement de l'agencement influençant l'état de rotation (84), peut être amené dans un état de commande (B,) qui se trouve en dehors d'une région de commande (C-D) prévue entre une position d'embrayage et une position de débrayage pour régler le plateau de pression associé (40).
